# EUROPÄISCHE PATENTSCHRIFT

(11) **EP 2 962 806 B1**
(45) Veröffentlichungstag und Bekanntmachung des Hinweises auf die Patenterteilung: **02.08.2017**
(21) Anmeldenummer: 15170136.4
(22) Anmeldetag: 01.06.2015
(51) Int. Cl.: B23Q 1/01, B23Q 7/00, B24B 5/04, B24B 41/06, B24B 41/02, B23Q 1/76, B23Q 1/58, B23Q 17/20, B23Q 17/22

(54) **WERKZEUGMASCHINE, INSBESONDERE EINE SCHLEIFMASCHINE, SOWIE WERKSTÜCKAUFNAHMEEINRICHTUNG FÜR EINE WERKZEUGMASCHINE**
MACHINE TOOL, IN PARTICULAR A GRINDING MACHINE, AND WORKPIECE HOLDING DEVICE FOR A MACHINE TOOL
MACHINE-OUTIL, EN PARTICULIER UNE MEULEUSE, ET PORTE-PIÈCE POUR UNE MACHINE-OUTIL

(30) Priorität: 30.06.2014 DE 102014109149
(43) Veröffentlichungstag der Anmeldung: 06.01.2016
(73) Patentinhaber: Fritz Studer AG, 3612 Steffisburg (CH)
(72) Erfinder: Grunder, Fritz, 3654 Gunten (CH); Albertin, Reto, 3628 Uttigen (CH); Zwahlen, Reto, 3613 Steffisburg (CH)
(74) Vertreter: Witte, Weller & Partner Patentanwälte mbB

(56) Entgegenhaltungen:
- EP-A2- 0 239 161
- EP-A2- 2 682 229
- WO-A1-2005/080048
- WO-A1-2011/032682
- GB-A- 1 088 321

## Beschreibung

Die Erfindung betrifft eine Werkstückaufnahmeeinrichtung für eine Werkzeugmaschine, insbesondere für eine Schleifmaschine, zur spanenden Bearbeitung von Werkstücken, wobei die Werkstückaufnahmeeinrichtung einen Werkstücktisch mit einer Führung aufweist, an der eine Werkstückhalterung aufnehmbar ist, vorzugsweise längsverschieblich aufnehmbar ist. Die Erfindung betrifft ferner eine Werkzeugmaschine, insbesondere eine Schleifmaschine, zur spanenden Bearbeitung von Werkstücken, die mit einer derartigen Werkstückaufnahmeeinrichtung versehen ist.

EP 0 239 161 A2 und WO 2005/080048 A1 werden als nächstliegender Stand der Technik gegenüber dem Gegenstand des Anspruchs 1 angesehen. Sie zeigen jeweils eine Werkstückaufnahmeeinrichtung für eine Werkzeugmaschine, insbesondere eine Schleifmaschine, zur spannenden Bearbeitung von Werkstücken, wobei die Werkstückaufnahmeeinrichtung einen Werkstücktisch mit einer Führung aufweist, an der eine Werkstückhalterung aufnehmbar ist, wobei der Werkstücktisch ferner einen Trägerabschnitt mit einem Modulträger aufweist, wobei der Trägerabschnitt der Führung zugeordnet ist wobei der Modulträger längsverschieblich am Trägerabschnitt aufgenommen ist und mit einem Antrieb koppelbar ist.

Eine Werkzeugmaschine, die insbesondere als Schleifmaschine ausgebildet ist, ist beispielhaft aus der EP 2 682 229 A2 bekannt. Es handelt sich dabei um eine Werkzeugmaschine, insbesondere eine Schleifmaschine, zur spanenden Bearbeitung von Werkstücken, mit einer Werkstückaufnahme zur Aufnahme eines Werkstücks, mit einem Spindelkopf zur Aufnahme eines Werkzeugs, insbesondere einer Schleifscheibe, mit einer Handhabungseinrichtung zum automatisierten Werkstückwechsel, und mit einer Messeinrichtung zur Erfassung zumindest eines Werkstückparameters.

Aus der DE 38 24 572 A1 ist eine Werkzeug- und Montagemaschine bekannt, mit einem Maschinenbett mit zumindest einer in Maschinenlängsrichtung verlaufenden Führung, auf der stationäre und/oder bewegliche Schlitten geführt sind, die zur Aufnahme von Spanneinrichtungen, Stützeinrichtungen und Handhabungseinrichtungen für Werkzeuge bzw. Werkstücke vorgesehen sind, wobei zur Komplettbearbeitung von Werkstücken auf dem Bett eine durchgehende Hauptführung ausgebildet ist, zu der parallel auf dem Bett eine weitere Hilfsführung angeordnet ist.

Aus der DE 10 2007 044 060 A1 ist eine Vertikalbearbeitungsmaschine in Modulbauweise bekannt, mit einem Maschinengestell, einer Vielzahl von ersten Befestigungselementen, die zumindest an einer ersten Fläche des Maschinengestells angeordnet sind, insbesondere an der Vorderseite des Maschinengestells, mit zumindest einem Führungsmodul, und mit zumindest einem Schlittenmodul, das verfahrbar an dem zumindest einen Führungsmodul gelagert ist, wobei das Führungsmodul eine Vielzahl von zweiten Befestigungselementen aufweist, die zu den ersten Befestigungselementen gepaart sind, wobei das Führungsmodul mit dem Maschinengestell verbindbar ist, und wobei das zumindest eine Schlittenmodul eine Vielzahl von ersten Befestigungselementen aufweist.

Aus der EP 2 345 492 A2 ist eine materialabtragende Werkzeugmaschine mit rotierend angetriebenem Werkstück bekannt, insbesondere eine Drehmaschine, die eine Kaltrolleinheit aufweist, wobei die Kaltrolleinheit abseits der Werkzeugeinheiten für materialabtragende Werkzeuge angeordnet ist und auf Z-Führungen der materialabtragenden Werkzeugeinheiten am Maschinenbett verfahrbar ist.

Weitere Werkzeugmaschinen sind aus der US 3 762 102 A, der DE 10 2009 041 596 A1 sowie der US 4 546 531 A bekannt.

Werkzeugmaschinen, etwa Schleifmaschinen, insbesondere Rundschleifmaschinen, sind im Stand der Technik bekannt. So können beispielsweise Rundschleifmaschinen rotationssymmetrische Werkzeuge, etwa Schleifscheiben, aufweisen. Diese können in geeigneter Weise mit einem Werkstück zur Materialabtragung zusammenwirken. Rundschleifmaschinen können beispielsweise zum Außenrundschleifen, Innenrundschleifen, ferner zum Einstechschleifen bzw. Schrägeinstechschleifen ausgebildet sein. Neben Schleifscheiben können beim Rundschleifen grundsätzlich auch Schleifbänder zur Anwendung kommen. Neben rotationssymmetrischen Werkstückflächen können etwa auch exzentrisch ausgebildete Werkstückflächen bearbeitet werden, wenn die Werkstückaufnahme und eine Werkzeugeinheit (etwa der Spindelkopf) in geeigneter Weise antreibbar und relativ zueinander verfahrbar sind. Auf diese Weise können etwa Nockenwellen, Kurbelwellen oder ähnliche Werkstücke mit exzentrischen Geometrien bearbeitet bzw. geschliffen werden. Ferner sind Werkzeugmaschinen bekannt, die eine kombinierte Bearbeitung von Werkstücken erlauben, etwa kombinierte Schleif- und Drehmaschinen.

Bei der spanenden Bearbeitung, insbesondere bei der Schleifbearbeitung, besteht häufig der Wunsch nach hochgenauen und reproduzierbaren Fertigungsergebnissen. Vor diesem Hintergrund wird bisweilen angestrebt, Werkstücke während der Bearbeitung oder unmittelbar daran anschließend zu vermessen bzw. zu prüfen. Dies kann Durchlaufzeiten reduzieren und die Fertigungsqualität erhöhen. Ferner ist eine Rückkopplung mit dem Bearbeitungsprozess vorstellbar, indem etwa Messergebnisse ausgewertet und auf deren Basis Bearbeitungsparameter angepasst werden.

Ein zu bearbeitendes Werkstück kann etwa zwischen zwei Spitzen einer Werkstückaufnahme oder aber einseitig in einer Werkstückaufnahme aufgenommen sein. Daneben ist das sogenannte spitzenlose Schleifen bekannt, bei dem das Werkstück in der Schleifmaschine nicht (axial) zwischen Spitzen aufgenommen ist. Vielmehr kann das Werkstück etwa über Auflageschienen, Regelscheiben, Führungsrollen, Lünetten oder dergleichen aufgenommen und geführt werden.

Unter einer Werkstückaufnahmeeinrichtung ist üblicherweise eine Einrichtung zu verstehen, die zur Aufnahme und Bereitstellung zumindest eines Werkstücks für Bearbeitungszwecke ausgebildet ist. Demgemäß kann die Werkstückaufnahmeeinrichtung etwa eine Werkstückspindel, einen Reitstock, Lünetten, Spannvorrichtungen, Abstützvorrichtungen, Spannfutter, Trägerscheiben und Ähnliches umfassen. Üblicherweise weist eine Werkstückaufnahmeeinrichtung ferner einen Werkstücktisch auf, der mit einem Gestell oder Maschinenbett der Werkzeugmaschine koppelbar ist. Grundsätzlich kann der Werkstücktisch fix mit dem Maschinenbett gekoppelt sein. Es ist jedoch auch vorstellbar, den Werkstücktisch verschieblich oder verfahrbar am Maschinenbett aufzunehmen. Auf diese Weise kann eine Relativbewegung des Werkstücktisches gegenüber dem Maschinenbett realisiert werden. Auf diese Weise kann also durch das Zusammenwirken zwischen dem Maschinenbett und dem Werkstücktisch bereits eine (Bewegungs-) Achse bereitgestellt werden. Hierbei kann es sich üblicherweise um eine Längsachse handeln, also um eine Achse, die allgemein parallel zu einer Längserstreckung eines aufzunehmenden Werkstücks orientiert ist.

Am Werkstücktisch können verschiedene Komponenten der Werkstückaufnahmeeinrichtung aufgenommen sein. Hierbei kann es sich insbesondere um Werkstückhalter handeln. Typische Beispiele für Werkstückhalter können etwa Werkstückspindeln sein, die mit entsprechenden Spannmitteln oder Haltern zur Fixierung der Werkstücke ausgerüstet sind. Ferner können Werkstückhalter etwa auch sogenannte Reitstöcke oder ähnliche Gestaltelemente umfassen. Zur Aufnahme von Werkstückhaltern und ähnlichen Gestaltelementen ist üblicherweise am Werkstücktisch eine Führung ausgebildet, die ein Führungsprofil aufweist. Werkstückhalter und ähnliche Komponenten, die mit einem entsprechenden Gegenprofil ausgestaltet sind, können an der Führung aufgenommen und fixiert werden.

Es besteht generell der Wunsch, den Funktionsumfang von Werkzeugmaschinen zu erweitern. Dies kann etwa die Handhabung von Werkstücken, erweiterte Bearbeitungsfunktionen sowie Qualitätssicherungsmaßnahmen betreffen. Es ist daher unter Umständen erforderlich, weitere Komponenten in einen Prozessraum einer Werkzeugmaschine einzubringen und dort anzuordnen. Dies kann mit einem erhöhten Aufwand einhergehen, da dies häufig auch die Integration zusätzlicher (Positionier-) Achsen, Antriebe und ähnlicher Komponenten erfordert. Ferner kann ein zur Bearbeitung zur Verfügung stehender Bearbeitungsraum durch zusätzliche Komponenten reduziert werden. Dies kann sich nachteilig auf die Produktivität der Werkzeugmaschine auswirken. Unter Umständen können Werkstücke bestimmter Abmessungen aufgrund der Anwesenheit von Zusatzkomponenten im Prozessraum, die in den Bearbeitungsraum hineinragen, nicht mehr bearbeitet werden.

Vor diesem Hintergrund liegt der Erfindung die Aufgabe zugrunde, eine Werkstückaufnahmeeinrichtung für eine Werkzeugmaschine sowie eine Werkzeugmaschine, insbesondere eine Schleifmaschine, mit einer solchen Werkstückaufnahmeeinrichtung anzugeben, die in einfacher Weise die Realisierung und Bereitstellung zusätzlicher Funktionalitäten erlauben können und einen zur Verfügung stehenden Bearbeitungsraum nicht übermäßig einschränken. Die Werkstückaufnahmeeinrichtung soll möglichst eine hohe Flexibilität bereitstellen und vorzugsweise zum Zusammenwirken mit verschiedenen Modulen ausgestaltet sein, die verschiedene (Zusatz-) Funktionalitäten bereitstellen können. Darüber hinaus soll jedoch die eigentliche Funktion der Werkstückaufnahmeeinrichtung, nämlich die Aufnahme und Bereitstellung von Werkstücken für die Bearbeitung, nicht oder nur unwesentlich beeinträchtigt werden.

Diese Aufgabe wird erfindungsgemäß durch eine Werkstückaufnahmeeinrichtung für eine Werkzeugmaschine, insbesondere eine Schleifmaschine, zur spanenden Bearbeitung von Werkstücken gelöst, wobei die Werkstückaufnahmeeinrichtung ein Werkstücktisch mit einer Führung aufweist, an der eine Werkstückhalterung aufnehmbar ist, vorzugsweise längsverschieblich aufnehmbar ist, wobei der Werkstücktisch ferner einen Trägerabschnitt mit einem Modulträger, insbesondere mit einem Messträger zur Aufnahme einer Messeinheit, aufweist, wobei der Trägerabschnitt der Führung zugeordnet ist, wobei der Modulträger längsverschieblich am Trägerabschnitt aufgenommen ist und mit einem Antrieb koppelbar ist, und wobei der Trägerabschnitt in die Führung integriert ist.

Die Aufgabe der Erfindung wird auf diese Weise vollständig gelöst.

Erfindungsgemäß kann nämlich der Trägerabschnitt mit dem Modulträger derart in die Führung integriert werden, dass diese weiterhin in grundsätzlich bekannter Weise zur Aufnahme von Werkstückhalterungen ausgebildet ist. Zusätzlich kann jedoch am Modulträger des Trägerabschnitts zumindest eine weitere Komponente, vorzugsweise eine Messeinheit, aufgenommen werden, die in der Längsrichtung verschieblich oder verlagerbar ist. Der Modulträger kann insbesondere relativ zum Werkstücktisch in der Längsrichtung verlagerbar gestaltet sein. Insbesondere kann die Verlagerbarkeit durch einen separaten Antrieb gewährleistet sein. Mit anderen Worten kann in die durch den Werkstücktisch bereitgestellte Führung eine zusätzliche steuerbare Achse integriert werden, die die grundlegende Funktionalität der Werkstückaufnahmeeinrichtung, nämlich die Aufnahme und Fixierung des Werkstücks für die Bearbeitung, nicht oder nur unwesentlich beeinträchtigt. Der Trägerabschnitt mit dem Modulträger kann jedoch für eine Vielzahl von Zusatzfunktionalitäten und/oder Zusatzkomponenten genutzt werden, insbesondere für Messaufgaben und/oder Qualitätssicherungsaufgaben. Grundsätzlich können am Modulträger auch Handlingeinrichtungen, Abstützeinrichtungen und ähnliche Komponenten aufgenommen sein. Vorzugsweise werden solche Komponenten am Modulträger aufgenommen, bei denen die Längsverschieblichkeit relativ zum Werkstücktisch bei der Anwendung mit Vorteilen verbunden ist.

Mit anderen Worten kann der Trägerabschnitt als Fortsetzung (oder Zwischenstück) der (Haupt-)Führung ausgebildet sein, die bereits durch den Werkstücktisch bereitgestellt wird. Vorzugsweise ist der Trägerabschnitt bündig in die Führung integriert. Der Trägerabschnitt kann derart integriert werden, dass die (Bauraum- )Nachteile von außen angeflanschten Zusatzmodulen, wie etwa separaten Hilfsachsen, vermeidbar sind. Der Trägerabschnitt kann nahezu bauraumneutral integriert werden. Der Trägerabschnitt kann in die Führung, bzw. in den Werkstücktisch, der die Führung aufweist, eingelassen werden und/oder versenkt darin angeordnet sein. Die hat wesentliche Vorteile bei Werkzeugmaschinen, die mit Einhausungen versehen sind, da die eingehausten Prozesskabinen bzw. Bearbeitungsräume vorgegeben sind und nicht beliebig angepasst werden können. Vorzugsweise ist der Trägerabschnitt zwischen einer ersten Werkstückhalterung, etwa einer Werkstückspindel mit Spannfutter, und einer zweiten Werkstückhalterung, etwa einem Reitstock, angeordnet.

Allgemein kann zumindest eine Werkstückhalterung am Werkstücktisch aufgenommen sein. Insbesondere während der Bearbeitung des Werkstücks kann die zumindest eine Werkstückhalterung am Werkstücktisch, insbesondere an dessen Führung, fixiert sein. Dies kann beinhalten, dass die zumindest eine Werkstückhalterung während der Bearbeitung gerade nicht in der Längsrichtung verfahren und/oder verschoben werden kann. Allgemein kann die zumindest eine Werkstückhalterung eine Werkstückspindel, einen Reitstock, Spanneinrichtungen und ähnliche Komponenten zur Aufnahme und Fixierung des Werkstücks umfassen.

Sofern im Rahmen dieser Offenbarung von einer "Längsverschieblichkeit" die Rede ist, kann darunter eine Verfahrbarkeit oder Bewegung entlang einer Achse aufgefasst werden, die im Wesentlichen parallel zu einer Längsachse des Werkstücks orientiert ist.

Vorzugsweise ist der Trägerabschnitt als Bestandteil der Führung der Werkstückaufnahmeeinrichtung ausgebildet. Dies heißt mit anderen Worten, aus Sicht einer Werkstückhalterung, die mit einem geeigneten Gegenprofil zur Aufnahme am Führungsprofil der Führung ausgebildet ist, ergibt sich durch die Integration des Trägerabschnitts in den Werkstücktisch kein wesentlicher Unterschied. Grundsätzlich könnte also etwa auch die Werkstückhalterung zumindest abschnittsweise in den Trägerabschnitt verfahren werden, um dort fixiert werden zu können.

Gemäß einer weiteren Ausgestaltung der Werkstückaufnahmeeinrichtung definieren der Trägerabschnitt, der Modulträger und der Antrieb eine Positionierachse, die ein Verfahren des Modulträgers in einer Längsrichtung entlang zumindest eines Abschnitts der Führung erlaubt, der durch den Trägerabschnitt definiert ist, wobei die Werkstückhalterung längsverschieblich an der Führung aufnehmbar ist. Mit anderen Worten kann eine Positionierachse bereitgestellt werden, die grundsätzlich parallel zur (globalen) Längsachse der Werkzeugmaschine orientiert ist. Die (globale) Längsachse der Werkzeugmaschine kann auch als Z-Achse bezeichnet werden. Allgemein kann die Z-Achse auch als Vorschubachse bezeichnet werden. Es kann von Vorteil sein, innerhalb der bzw. relativ zur Z-Achse eine weitere Relativbewegung in der Längsrichtung zu ermöglichen. Auf diese Weise können z.B. Abschnitte des Werkstücks axial angetastet und vermessen werden.

Gemäß einer weiteren Ausgestaltung der Werkstückaufnahmeeinrichtung ist der Trägerabschnitt als Einsatz ausgebildet, der in einer Aufnahme des Werkstücktisches aufnehmbar ist. Auf diese Weise kann der Trägerabschnitt als Abschnitt der Führung ausgebildet sein, der eine Führungsgeometrie bzw. einen Führungsquerschnitt bereitstellt, die im Wesentlichen dem Führungsquerschnitt bzw. der Führungsgeometrie des Werkstücktisches entsprichen. Dies betrifft insbesondere eine "Schnittstelle" der Führung zur Aufnahme entsprechender Gegenprofile.

Gemäß einer weiteren Ausgestaltung weist die Führung ein sich in der Längsrichtung erstreckendes Führungsprofil auf, wobei sich das Führungsprofil im Werkstücktisch erstreckt und zumindest abschnittsweise auch im Trägerabschnitt fortsetzt. Mit anderen Worten kann der Trägerabschnitt ein Führungsprofil bereitstellen, das als Fortsetzung des Führungsprofils der Führung ausgebildet ist, das bereits durch den Werkstücktisch bereitgestellt ist. Anders gesagt kann entlang der gesamten Längserstreckung der Führung ein Querschnitt bereitgestellt werden, an dem mit entsprechenden Gegenprofilen versehene Komponenten geführt und/oder aufgenommen werden können. Somit kann etwa eine Werkstückspindel, ein Reitstock oder ein ähnliches Element ohne weiteres in den Bereich des Trägerabschnitts verfahren werden, da auch dort eine geeignete Führungskontur bzw. ein geeignetes Führungsprofil bereitsteht. Auf diese Weise beeinträchtigt der Trägerabschnitt nicht die grundlegende Funktionalität der Werkstückaufnahmeeinrichtung.

Es versteht sich, dass der Trägerabschnitt zumindest abschnittsweise mit einem Querschnitt oder Querprofil versehen sein kann, der nicht dem Führungsprofil der Führung des Werkstücktisches entspricht. Unter einem Querprofil kann ein Querschnitt verstanden werden, der sich im Wesentlichen senkrecht zur Längserstreckung oder Längsachse (Z-Achse) erstreckt.

Gemäß einer Weiterbildung der obigen Ausgestaltung sind das Führungsprofil des Werkstücktisches und das Führungsprofil des Trägerabschnitts im miteinander gefügten Zustand miteinander ausgerichtet, vorzugsweise deckungsgleich miteinander ausgerichtet.

Gemäß einer weiteren Ausgestaltung der Werkstückaufnahmeeinrichtung bildet der Trägerabschnitt einen Abschnitt der Führung aus, insbesondere einen mittigen Abschnitt entlang einer Längserstreckung der Führung. Vorzugsweise weist die Führung demgemäß einen Basisabschnitt auf, der im Wesentlichen einstückig mit dem Werkstücktisch ausgebildet ist. Ferner kann der Trägerabschnitt mittig in den Basisabschnitt eingebracht sein und dort an einer Aufnahme aufgenommen sein. Auf diese Weise kann sich nach außen hin eine durchgängige Erstreckung der Führung mit dem Führungsprofil ergeben.

Gemäß einer weiteren Ausgestaltung der Werkstückaufnahmeeinrichtung umfasst der Modulträger zumindest einen Tragarm, der eine sich im Wesentlichen in der Längsrichtung erstreckende Ausnehmung des Trägerabschnitts durchragt. Dies heißt mit anderen Worten, dass der Modulträger an einer Unterseite der Führung aufgenommen und geführt sein kann. Dies kann beinhalten, dass der Modulträger an einer eigenen, separaten Längsführung aufgenommen und geführt ist. Hierbei kann es sich etwa um einen Lineartrieb, insbesondere um einen Spindeltrieb, handeln.

Die obige Gestaltung hat zur Folge, dass der Modulträger die Führung bzw. deren wirksame Führungsflächen nicht unmittelbar kontaktiert. Auf diese Weise kann der Modulträger unabhängig von der (globalen) Führung am Werkstückträger aufgenommen werden. Dies kann den Vorteil haben, dass durch den Modulträger an der Führung selbst kein Verschließ erzeugt wird. Eine Trennung der (globalen) Führung für die Werkstückhalterung und der (zusätzlichen, lokalen) Führung für den Modulträger hat den weiteren Vorteil, dass beide Systeme voneinander unabhängig sind und sich nicht wesentlich beeinflussen. Dies kann sich positiv auf die Bearbeitungsgenauigkeit auswirken. Die (globale) Führung unterliegt auch dann keinem erhöhten Verschleiß, wenn der Modulträger häufig entlang seiner (lokalen) Führung verfahren wird. Vorzugsweise weist der Modulträger ein integriertes Messsystem auf, das auch als Positionserfassungseinheit bezeichnet werden kann. Der Modulträger kann vorzugsweise ohne geometrische Beeinflussung der (globalen) Führung montiert und demontiert werden. Die kann die Unabhängigkeit des Modulträgers weiter erhöhen und weitere Anwendungsmöglichkeiten schaffen.

Gemäß einer alternativen Ausgestaltung ist der Modulträger als an das Führungsprofil angepasster längsverschieblicher Reiter ausgestaltet. Gemäß dieser Ausgestaltung kann der Modulträger also an das Führungsprofil der Führung angepasst sein, um entlang der Führung verfahren werden zu können. Der Modulträger kann also die Führung bzw. das Führungsprofil zumindest teilweise nutzen. Auch bei dieser Gestaltung ist es vorstellbar, dass der Modulträger zumindest einen Tragarm aufweist, der eine sich in der Längsrichtung erstreckende Ausnehmung des Trägerabschnitts durchragt, um an einer Unterseite des Trägerabschnitts mit einem Antrieb gekoppelt zu werden.

Gemäß einer weiteren Ausgestaltung der Werkstückaufnahmeeinrichtung ist der Modulträger mit einem Lineartrieb koppelbar, insbesondere mit einem Spindeltrieb. Dies kann in grundsätzlich vorbeschriebener Weise durch den zumindest einen Tragarm erfolgen. Mit anderen Worten ist es bevorzugt, wenn der Lineartrieb, insbesondere der Spindeltrieb, an einer "Unterseite" des Trägerabschnitts angeordnet ist. Sofern im Rahmen dieser Offenbarung von einer Unterseite die Rede ist, ist darunter im Wesentlichen diejenige Seite zu verstehen, die der Seite der Führung abgewandt ist, an der die zumindest eine Werkstückhalterung angeordnet ist. Demgemäß kann die letztgenannte Seite grundsätzlich auch als "Oberseite" bezeichnet werden. Es versteht sich, dass die Begriffe "Unterseite" und "Oberseite" nicht im einschränkenden Sinne zu verstehen sind.

Die Anordnung des Lineartriebs an der Unterseite des Trägerabschnitts hat den Vorteil, dass der Lineartrieb Verschmutzungen, die an der Oberseite auftreten können, nicht oder nur in vermindertem Ausmaß ausgesetzt ist. Übliche Verschmutzungen beim Schleifen von Werkstücken können etwa durch Späne, Abrieb, Schleifemulsionen, Betriebsmittel, Kühlmittel, Kühlschmierstoffe und Ähnliches auftreten. Es ist daher von Vorteil, den Lineartrieb an der Unterseite anzuordnen und demgemäß gegenüber der Oberseite zu kapseln.

Gemäß einer Weiterbildung der obigen Ausgestaltung ist der Lineartrieb mit einem Motor, insbesondere mit einem Servomotor, koppelbar, wobei der Motor an dem Werkstücktisch angeordnet ist, und wobei der Motor mittelbar mit dem Modulträger koppelbar ist, insbesondere mittels eines Riementriebs, wobei sich der Riementrieb zumindest abschnittsweise durch eine Gehäuseausnehmung im Werkstücktisch erstreckt. Diese Ausgestaltung hat den Vorteil, dass der eigentliche Antrieb, also der Motor, der die Längsverschiebung des Modulträgers bewirkt, entfernt vom Modulträger angeordnet werden kann. Der Modulträger kann mittelbar über den Lineartrieb und, sofern vorhanden, den Riementrieb, mit dem Motor gekoppelt sein. Dies hat den Vorteil, dass der Motor in einem Bereich angeordnet werden kann, der Verschmutzungen und/oder schädlichen Umwelteinflüssen nur in geringerem Maße ausgesetzt ist. Ferner kann sich der Vorteil ergeben, dass der Motor etwa für Wartungsarbeiten oder dergleichen einfach zugänglich ist. Eine Kopplung zwischen dem Motor und dem Lineartrieb kann etwa über einen Zahnriemen oder ein ähnliches Zugmittel erfolgen.

Es versteht sich, dass auch andere Arten der Kopplung zwischen dem Motor und dem Lineartrieb vorstellbar sind, beispielsweise über Zahnräder oder ähnliche Kraftübertragungselemente. Schlussendlich ist es auch vorstellbar, dass der Lineartrieb direkt mit dem Motor gekoppelt ist, oder als Lineartrieb mit integriertem Motor ausgestaltet ist. Da es jedoch von Vorteil ist, den Werkstücktisch möglichst nur in geringem Maße zu "schwächen", um die Aufnahme für den Trägerabschnitt auszubilden, kann es besonders bevorzugt sein, den Motor außerhalb des Werkstücktisches anzuordnen. Die Kraftübertragung kann in geeigneter Weise durch ein Getriebe erfolgen, etwa über einen Zugmitteltrieb, Zahnräder oder dergleichen.

Gemäß einer weiteren Ausgestaltung der Werkstückaufnahmeeinrichtung sind am Werkstücktisch eine erste Halterung und eine zweite Halterung, insbesondere eine Werkstückspindel und ein Reitstock, aufgenommen, wobei die erste Halterung, die zweite Halterung und der Modulträger an der Führung aufgenommen sind, und wobei der Modulträger zwischen der ersten Halterung und der zweiten Halterung verfahrbar ist. Üblicherweise werden zu bearbeitende Werkstücke beidseitig aufgenommen bzw. gespannt. Demgemäß kann einem ersten Ende des Werkstücks eine erste Halterung und einem zweiten Ende des Werkstücks eine zweite Halterung zugeordnet sein. Beispielhaft kann es sich bei den Halterungen um eine Werkstückspindel sowie einen dieser gegenüberliegend angeordneten Reitstock handeln. Zwischen der Werkstückspindel und dem Reitstock kann das Werkstück bearbeitet werden, etwa mittels einer Schleifscheibe geschliffen werden.

Es ist von Vorteil, wenn der Modulträger zwischen der ersten Halterung und der zweiten Halterung angeordnet ist und zumindest in begrenztem Maße zwischen diesen in der Längsrichtung verfahrbar ist. Auf diese Weise kann der Modulträger, insbesondere eine mittelbar oder unmittelbar am Modulträger aufgenommene Messeinheit, in der Längsrichtung verfahren werden, um verschiedene Messaufgaben zu erfüllen. Dies kann grundsätzlich bereits während der Bearbeitung erfolgen. Es wäre auch vorstellbar, Messaufgaben mit (geringem) zeitlichem Versatz zur Bearbeitung auszuführen. Jedenfalls ist es von Vorteil, das Werkstück im aufgenommenen (auch: aufgespannten) Zustand zu vermessen. Einerseits ist dann nämlich eine Ausgangslage des Werkstücks hinreichend genau definiert. Dies kann von Vorteil für Absolutmessungen sein. Ferner kann die Durchführung von Messungen am eingespannten Werkstück von Vorteil sein, da etwa dann, wenn Abweichungen festgestellt werden, eine Korrektur ohne erneutes Aufspannen und/oder Einspannen erfolgen kann.

Gemäß einer weiteren Ausgestaltung der Werkstückaufnahmeeinrichtung ist am Modulträger ein Messaufnehmer, insbesondere ein optischer Messtaster, ein taktiler Messtaster oder ein Näherungssensor, aufgenommen. Allgemein kann der Messaufnehmer dazu ausgebildet sein, das Werkstück oder Abschnitte davon axial anzutasten. Auf diese Weise können etwa axiale Erstreckungen bestimmt werden. Dies kann sich beispielsweise beim Schleifen von Nuten, Einstiche, Absätze, Nocken oder ähnlichen Gestaltelementen als vorteilhaft erweisen. Alternativ oder zusätzlich kann der Messaufnehmer dazu ausgestaltet sein, Durchmesserwerte zu erfassen. Dies kann insbesondere beim Außenrundschleifen von Vorteil sein. Es versteht sich, dass der Messaufnehmer grundsätzlich als Einzweck-Messaufnehmer, ferner jedoch auch als Mehrzweck-Messaufnehmer gestaltet sein kann.

Gemäß einer Weiterbildung der Werkstückaufnahmeeinrichtung ist ferner eine Positionserfassungeinheit vorgesehen, die dazu ausgebildet ist, absolute Positionen und/oder relative Positionen des Modulträgers, insbesondere eines am Modulträger aufgenommenen Messaufnehmers, zu erfassen. Auf diese Weise kann durch Erfassung der Position des Modulträgers auf Ist-Positionen des Werkstücks geschlossen werden, wenn diese durch den zumindest einen Messaufnehmer angetastet werden. Ferner kann sich der Vorteil ergeben, dass der Modulträger bzw. an diesem aufgenommene Elemente besonders genau verfahren werden können.

Gemäß einer weiteren Ausgestaltung ist der Werkstücktisch fest mit dem Maschinenbett koppelbar. Gemäß dieser Ausgestaltung kann eine Relativbewegung zwischen dem Werkstück und dem Werkzeug (etwa einer Schleifscheibe) in der Längsrichtung (entlang der Z-Achse) etwa durch einen Kreuztisch oder einen ähnlichen Verfahrtisch bewirkt werden, an dem die Spindel in der Längsrichtung verschieblich aufgenommen ist. Mit anderen Worten kann bei dieser Gestaltung der Werkstückaufnahmeeinrichtung eine Werkzeugmaschine in Kreuztischbauweise realisiert werden.

Gemäß einer alternativen Ausgestaltung ist die Werkstückaufnahmeeinrichtung in der Längsrichtung verschieblich am Maschinenbett aufnehmbar. Gemäß dieser Ausgestaltung kann also eine Relativbewegung zwischen dem Werkstücktisch und dem Werkzeug (etwa der Schleifscheibe) durch ein Verfahren des Werkstücktischs selbst bewirkt werden. Demgemäß kann der Werkstücktisch an einer (weiteren) Längsführung am Maschinenbett aufgenommen sein und über entsprechende Antriebe zur Bewegung in der Z-Richtung verfügen. Eine Werkzeugmaschine, die gemäß dieser Ausgestaltung gefertigt ist, kann auch als T-Schlitten-Maschine bezeichnet werden.

Die Werkzeugmaschine betreffend wird die Aufgabe der Erfindung durch eine Werkzeugmaschine, insbesondere eine Schleifmaschine, zur spanenden Bearbeitung von Werkstücken gelöst, die eine Werkstückaufnahmeeinrichtung gemäß zumindest einigen der vorstehend genannten Aspekte zur Aufnahme eines Werkstücks und einen Spindelkopf zur Aufnahme eines Werkzeugs, insbesondere einer Schleifscheibe, aufweist.

Gemäß einer Weiterbildung der Werkzeugmaschine ist diese als T-Schlitten-Maschine mit einem in der Längsrichtung verschieblichen Werkstücktisch oder als Kreuzschlittenmaschine mit einem Werkstücktisch ausgebildet, der an einem Maschinenbett festgelegt ist.

Gemäß einer weiteren Ausgestaltung der Werkzeugmaschine umfasst diese ferner eine Steuereinrichtung, die mit einer Positionserfassungeinheit koppelbar ist, die dazu ausgebildet ist, Verfahrwege des Modulträgers, insbesondere Verfahrwege eines am Modulträger aufgenommenen Messaufnehmers, zu erfassen. Die Erfassung kann grundsätzlich indirekt durch Überwachung eines Antriebs des Modulträgers erfolgen. Ferner kann auch eine direkte Erfassung, etwa über Maßstäbe oder ähnliche Lageerfassungsmittel, erfolgen.

Weitere Merkmale und Vorteile der Erfindung ergeben sich aus der nachfolgenden Beschreibung und Erläuterung mehrerer bevorzugter Ausführungsbeispiele unter Bezugnahme auf die Zeichnungen. Es zeigen:
- Fig. 1: eine perspektivische Ansicht einer als Schleifmaschine ausgebildeten Werkzeugmaschine mit einer Einhausung, die teilweise gebrochen dargestellt ist;
- Fig. 2: eine perspektivische Draufsicht einer Werkstückaufnahmeeinrichtung, die eine Führung mit einem Trägerabschnitt und einem Modulträger umfasst;
- Fig. 3: eine perspektivische Draufsicht einer Werkstückaufnahmeeinrichtung, die grundsätzlich ähnlich der Gestaltung gemäß Fig. 2 ausgeführt ist, wobei eine Werkstückspindel und ein Reitstock an einem Werkstücktisch aufgenommen sind, und wobei ein Trägerabschnitt, der einen Teil einer Führung der Werkstückaufnahmeeinrichtung ausbildet, in einem explodierten Zustand gezeigt ist;
- Fig. 4: eine perspektivische Teilansicht einer grundsätzlich analog der Gestaltung gemäß Fig. 3 ausgeführten Werkstückaufnahmeeinrichtung, wobei am Trägerabschnitt ein Messträger mit einer Messeinheit zur Vermessung eines Werkstücks aufgenommen ist;
- Fig. 5: eine perspektivische Ansicht (von schräg unten) eines Trägerabschnitts, der mit einem Lineartrieb versehen ist, wobei der Trägerabschnitt in eine Führung eines Werkstücktisches einer Werkstückaufnahmeeinrichtung integrierbar ist; und
- Fig. 6: eine perspektivische Draufsicht des Trägerabschnitts gemäß Fig. 5.

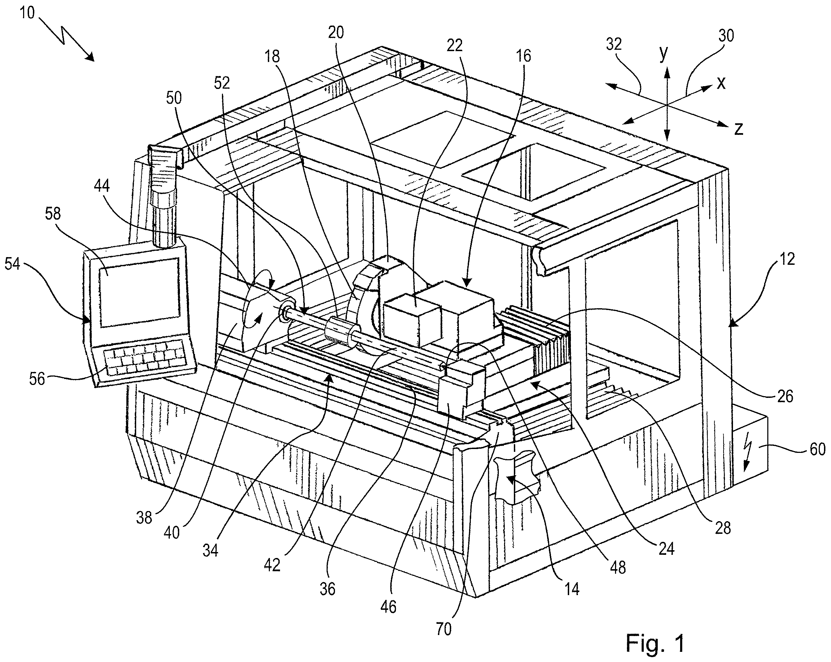

In Fig. 1 ist eine Werkzeugmaschine perspektivisch dargestellt und insgesamt mit 10 bezeichnet.

Die Werkzeugmaschine 10 ist vorliegend als Schleifmaschine ausgebildet, insbesondere als Rundschleifmaschine, allgemein auch als Horizontalschleifmaschine. Es versteht sich, dass die Werkzeugmaschine 10 grundsätzlich auch als Vertikalschleifmaschine konfiguriert sein kann. Die Werkzeugmaschine 10 weist eine Einhausung 12 auf, die als Gehäuse fungiert. Die Einhausung 12 ist in Fig. 1 teilweise gebrochen dargestellt. Die Einhausung 12 kann einen Prozessraum definieren, der nach außen abgeschlossen ist oder abschließbar ist. Die Einhausung 12 erlaubt insbesondere bei automatisierten Bearbeitungsvorgängen eine sichere Abgrenzung des Prozessraums der Werkzeugmaschine 10. Auf diese Weise kann eine grundsätzlich von beweglichen Komponenten ausgehende Gefahr minimiert werden. Ferner kann ein unerwünschter Austritt von Schmiermittel, Kühlflüssigkeit oder von Spänen in die Umgebung unterbunden werden. Die Einhausung 12 kann in geeigneter Weise mit Türen oder Klappen versehen sein, um den Prozessraum der Werkzeugmaschine 10 zugänglich zu machen. Es versteht sich, dass die Werkzeugmaschine 10 grundsätzlich auch ohne eine vollständig umhüllende Einhausung 12 gestaltet sein kann. So kann etwa eine lediglich abschnittsweise Einhausung 12 vorgesehen sein, beispielhaft eine zaunartige Einhausung 12.

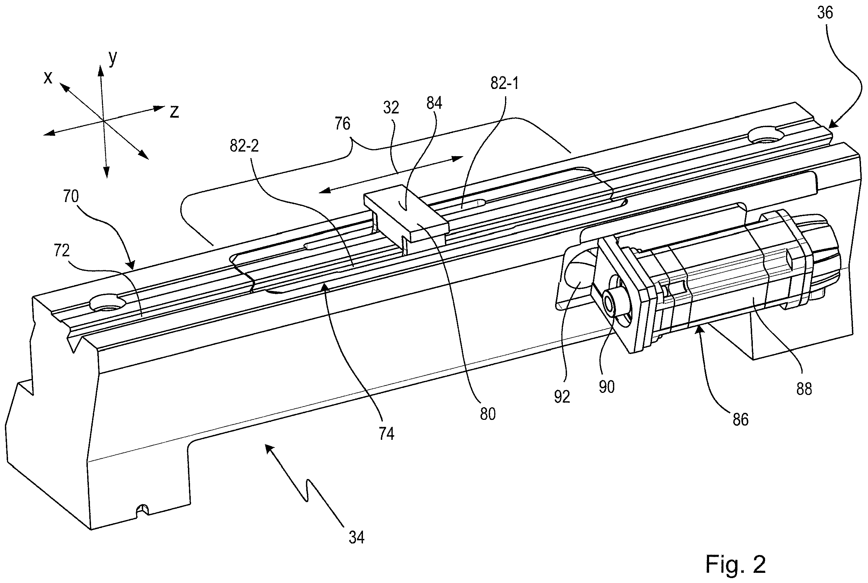

Die Werkzeugmaschine 10 weist ein Maschinenbett 14 auf, das allgemein auch als Gestell oder Maschinentisch bezeichnet werden kann. Das Maschinenbett 14 kann eine präzise Lagerung und Führung von Komponenten der Werkzeugmaschine 10 unter Vermeidung von Deformationen oder Verformungen ermöglichen. Mit dem Maschinenbett 14 ist (zumindest mittelbar) ein Spindelkopf 16 gekoppelt, an dem ein Bearbeitungswerkzeug aufgenommen ist. Der Spindelkopf 16 kann auch als Schleifkopf bezeichnet werden. Vorliegend handelt es sich bei dem Werkzeug um eine Schleifscheibe 18, die mit dem Spindelkopf 16 gekoppelt ist und durch einen Spindelantrieb 22 antreibbar ist, vgl. auch einen mit 23 bezeichneten Pfeil in Fig. 2. Die Schleifscheibe 18 kann durch den Spindelantrieb 22 in Rotationen versetzt werden und mit einem Werkstück zur Materialabtragung zusammenwirken. Die Schleifscheibe 18 kann mit einer Schutzhaube 20 versehen sein.

Es versteht sich, dass die Werkzeugmaschine 10 alternativ auch eine Mehrzahl von Werkzeugen, insbesondere Schleifscheiben 18 aufweisen kann. Beispielhaft können am Spindelkopf 16 zwei Schleifscheiben 18 vorgesehen sind, die für eine Bearbeitung selektiv einschwenkbar sind. Eine derartige Funktionalität kann etwa als sogenannte B-Achsen-Funktionalität beschrieben werden. Daneben ist es vorstellbar, sogenannte Revolver vorzusehen, die eine Mehrzahl von Schleifscheiben 18 für die Bearbeitung bereitstellen.

Die Kopplung des Spindelkopfes 16 mit dem Maschinenbett 14 erfolgt beispielhaft unter Verwendung eines Kreuztisches 24. Der Kreuztisch 24 kann eine erste Führung 26 und eine zweite Führung 28 bereitstellen. Die erste Führung 26 kann ein Verfahren des Spindelkopfes 16 entlang einer X-Achse erlauben, vgl. einen mit 30 bezeichneten Pfeil. Die zweite Führung 28 kann ein Verfahren des Spindelkopfes 16 in einer Z-Richtung erlauben, vgl. einen mit 32 bezeichneten Pfeil. Insgesamt ist in Fig. 1 beispielhaft ein korrespondierendes Koordinatensystem X-Y-Z dargestellt. Es versteht sich, dass die Zuordnung des Koordinatensystems X-Y-Z zur Werkzeugmaschine 10 bzw. zu deren Komponenten grundsätzlich auch in anderer Weise erfolgen kann. Insbesondere können Achsenbezeichnungen anderen Orientierungen zugeordnet sein. Es versteht sich ferner, dass die vorangehenden und nachfolgenden Aussagen ohne weiteres auf (transformierte) abgewandelte Koordinatensysteme übertragbar sind. In gleicher Weise können auch allgemeine Richtungsangaben, Drehrichtungsangaben, Angaben zu relativen Zuordnungen, die sich etwa auf bestimmte Figuren beziehen, grundsätzlich auch auf andere Figuren mit abgewandelten Blickrichtungen bzw. Ansichtsorientierungen übertragen werden.

Mit dem Maschinenbett 14 der Werkzeugmaschine 10 ist ferner eine Werkstückaufnahme 34 gekoppelt, die der Aufnahme und Fixierung eines zu bearbeitenden Werkstücks 50 dienen kann. Beispielhaft umfasst die Werkstückaufnahme 34 eine Führung 36, die einem mit dem Maschinenbett 14 gekoppelten Werkstücktisch 70 zugeordnet ist. Die Führung 36 kann grundsätzlich parallel zur Z-Achse (auch: Längsachse) verlaufen, vgl. Pfeil 32. Der Spindelkopf 16 mit dem daran aufgenommenen Werkzeug (Schleifscheibe 18) kann relativ zur Werkstückaufnahme 34 verfahren werden, um eine gewünschte Bearbeitung des Werkstücks 50 zu ermöglichen. Die Verfahrbewegung des Spindelkopfes 16 kann über geeignete Antriebe realisiert werden, die beispielsweise mit dem Kreuztisch 24 gekoppelt sind.

Die Werkstückaufnahme 34 weist beispielhaft eine Werkstückhalterung 40 auf, die etwa mit einer Werkstückspindel 38 für das Werkstück 50 versehen ist. Die Werkstückhalterung 40 kann beispielhaft ein Spannfutter aufweisen. Die Werkstückhalterung 40 kann grundsätzlich ebenso auch eine (Zentrier-)Spitze und/oder einen Spannkonus, Spannbacken oder Ähnliches umfassen. Die Werkstückspindel 38 kann ferner einen Spindelantrieb aufweisen, der es erlaubt, die Werkstückhalterung 40 mit dem daran aufgenommenen Werkstück 50 definiert um eine Längsachse 42 zu verdrehen, vgl. einen mit 44 bezeichneten Pfeil. Eine derartige Funktionalität kann eine sogenannte C-Achsen-Bearbeitung erlauben. Der bei der Werkstückspindel 38 fakultativ vorgesehene Antrieb kann beispielhaft derart ausgelegt und gesteuert sein, dass das Werkstück 50 hochgenau um die Achse 42 (die C-Achse) verdreht werden kann. Die C-Achsen-Bearbeitung erlaubt die Bearbeitung unrunder Werkstücke 50. Zu diesem Zweck kann die Werkzeugmaschine 10 über geeignete Steuerungs- und Regelungsorgane verfügen, um das Werkstück 50 definiert um die Achse 42 zu verdrehen und gleichzeitig das Werkzeug (Schleifscheibe 18) auf das Werkstück 50 zuzustellen bzw. von diesem wegzubewegen. Auf diese Weise können etwa Nockenwellen, Kurbelwellen oder Ähnliches bearbeitet werden.

Unabhängig davon, ob die Werkstückspindel 38 der Werkstückaufnahme 34 zur C-Achsen-Bearbeitung ausgebildet ist oder nicht, kann die Längsachse 42 zumindest durch die Werkstückhalterung 40 definiert sein. Es versteht sich, dass bei einem aufgenommenen Werkstück 50 dessen Längsachse mit der durch die Werkstückaufnahme 34 definierten Längsachse 42 zusammenfallen kann.

Die Werkstückhalterung 40 weist ferner beispielhaft einen Reitstock 46 auf. Vorliegend weist der Reitstock 46 beispielhaft eine Spitze 48, um das Werkstück 50 zentrieren zu können. Das Werkstück 50 kann grundsätzlich auch allein durch die Werkstückspindel 38 geführt und gehalten werden, ohne dass der Reitstock 46 erforderlich wäre. Insbesondere bei Werkstücken 50 mit hohem Längen-Durchmesser-Verhältnis kann sich jedoch eine zweiseitige Aufnahme mittels der Werkstückspindel 38 und dem Reitstock 46 empfehlen. Übermäßig lange Werkstücke 50 können ferner zusätzlich durch Lünetten, Rollen oder Auflager geführt und abgestützt werden (in Figur 1 nicht dargestellt). Es ist vorstellbar, die Werkstückspindel 38 bzw. den Reitstock 46 mit einem Linearantrieb zu versehen, um diese entlang der Führung 36 definiert und kontrolliert verfahren zu können.

Am Werkstück 50 ist beispielhaft ein Werkstückabschnitt 52 ausgebildet, der etwa mittels der Schleifscheibe 18 zu bearbeiten ist. Zu diesem Zweck kann die Schleifscheibe 18 rotatorisch angetrieben werden. Ferner kann die Schleifscheibe 18 entlang der X-Achse (radial) auf den Werkstückabschnitt 52 zugestellt bzw. von diesem entfernt werden. Auf diese Weise kann eine Bearbeitungstiefe beeinflusst werden. Eine Vorschubbewegung der Schleifscheibe 18 relativ zur Werkstückaufnahme 34 bzw. dem Werkstückabschnitt 52 des daran aufgenommenen Werkstücks 50 kann entlang der Z-Achse erfolgen. In Figuren 1 sind die Führungen 26, 28 in der X-Richtung und der Z-Richtung für den Spindelkopf 16 beispielhaft durch vereinfacht dargestellte Faltenbälge, Manschetten oder ähnliche Schutzelemente verdeckt bzw. abgedichtet. Auf diese Weise kann ein Verfahrantrieb des Spindelkopfes 16 vor Verschmutzungen und Beschädigungen geschützt werden.

Die in Fig. 1 dargestellte Werkzeugmaschine 10 weist ferner eine Bedienerschnittstelle 54 auf, die außerhalb eines Prozessraums oder Innenraums der Werkzeugmaschine 10 angeordnet ist. Auf diese Weise kann ein Bediener die Werkzeugmaschine 10 steuern, programmieren, regeln oder etwa Diagnosen durchführen, ohne mit dem Innenraum der Werkzeugmaschine 10 in Kontakt zu kommen. Bei der Bedienerschnittstelle 54 kann es sich etwa um eine Bedieneinheit handeln, die zumindest eine Eingabeeinheit 56 und eine Ausgabeeinheit 58 aufweist. Die Eingabeeinheit 56 kann eine Tastatur, Drucktaster, Stellhebel oder Ähnliches aufweisen. Die Eingabeeinheit 56 kann jedoch auch berührungsempfindliche Flächen aufweisen. Bei der Ausgabeeinheit 58 handelt es sich üblicherweise um einen Bildschirm, ferner um alphanumerische Anzeigen, Kontrollleuchten, Skalen oder Ähnliches. Insbesondere dann, wenn etwa ein Bildschirm berührungsempfindlich gestaltet ist, können die Eingabeeinheit 56 und die Ausgabeeinheit 58 zumindest teilweise durch identische Bauteile verwirklicht sein.

In Fig. 1 ist ferner mit dem Bezugszeichen 60 eine Steuereinrichtung angedeutet, die beispielsweise zumindest einen Prozessor umfasst, um Komponenten der Werkzeugmaschine 10 in geeigneter Weise ansteuern zu können. Auf diese Weise kann die Werkzeugmaschine 10 zur zumindest teilweise automatisierten Bearbeitung ausgebildet sein. Die Steuereinrichtung 60 kann etwa über die Bedienerschnittstelle 54 angesteuert und entsprechend instruiert werden. Es ist jedoch auch vorstellbar, die Steuereinrichtung 60 über externe Bedienerschnittstellen anzusteuern, etwa über externe Rechnerarbeitsplätze.

Anhand der Fig. 2 bis 6 wird eine besonders vorteilhafte Ausgestaltung einer Werkstückaufnahmeeinrichtung 34 erläutert, die sich zur Verwendung bei der Werkzeugmaschine 10 eignet. Die Werkstückaufnahmeeinrichtung 34 kann einen Werkstücktisch 70 umfassen. Der Werkstücktisch 70 kann grundsätzlich fest mit dem Gestell oder Maschinenbett 14 gekoppelt sein. Es wäre jedoch auch vorstellbar, den Werkstücktisch 70 mit einem eigenen Antrieb zu koppeln, um diesen relativ zum Maschinenbett 14 in der Längsrichtung entlang der Achse 32 verfahren zu können. Demgemäß kann der Werkstücktisch 70 Bestandteil einer T-Schlittenmaschine oder einer Kreuzschlittenmaschine sein. Allgemein ist der Werkstücktisch 70 als hochsteifes Bauteil ausgestaltet, um eine präzise Aufnahme und Führung eines zu bearbeitenden Werkstücks 50 zu erlauben. Insbesondere soll der Werkstücktisch 70 während einer Bearbeitung möglichst nur gering deformierbar sein, um die Bearbeitungsgenauigkeit weiter zu erhöhen.

Am Werkstücktisch 70 ist eine Führung 36 ausgebildet, die ein sich im Wesentlichen in der Längsrichtung 32 (Z-Achse) erstreckendes Führungsprofil 72 umfasst. Das Führungsprofil 72 kann etwa schienenartig gestaltet sein. Das Führungsprofil 72 kann prismatische Führungselemente aufweisen. Das Führungsprofil 72 kann geeignete Gleitflächen umfassen, die von (Gegen-) Gleitflächen von Komponenten kontaktiert werden, die am Führungsprofil 72 aufnehmbar sind. Neben grundsätzlich prismatisch gestalteten Führungsprofilen 72 können Führungen etwa Schwalbenschwanzführungsprofile, Säulenführungsprofile, Flachführungsprofile und weiter abgewandelte Führungsprofile umfassen.

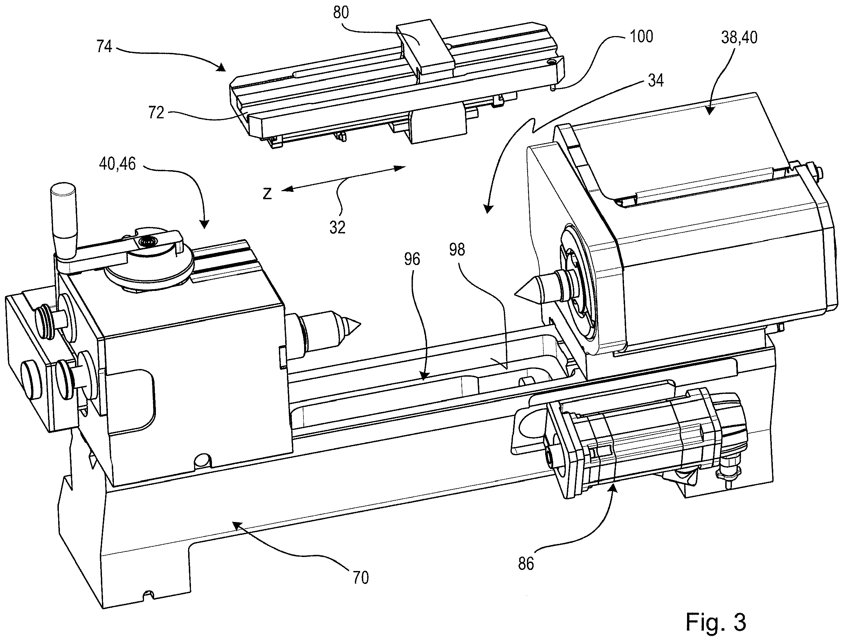

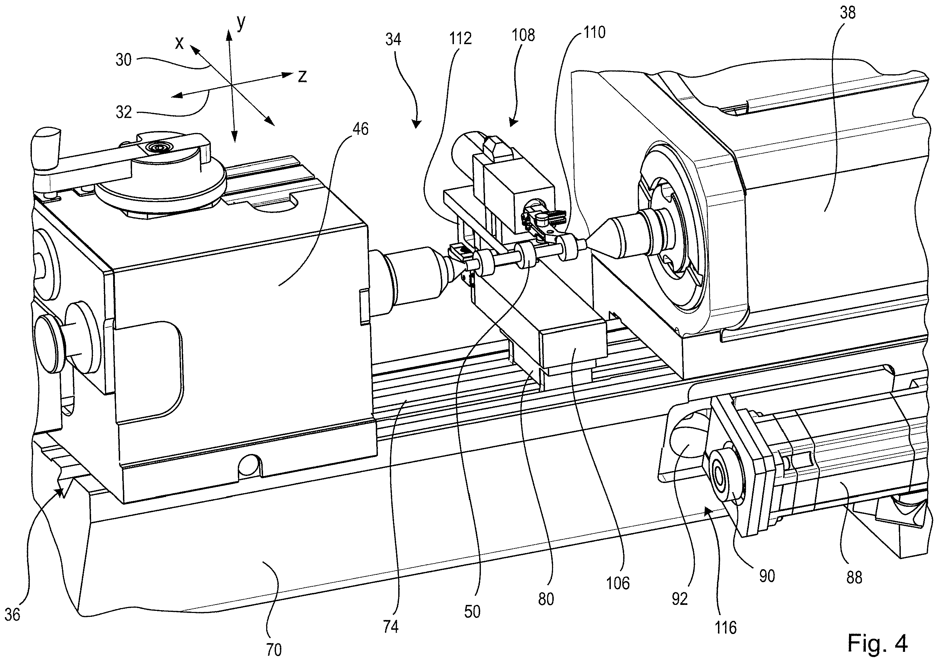

Insbesondere aus den Fig. 3 und 4 wird ersichtlich, dass an der Führung 36 des Werkstücktisches 70 zumindest eine Werkstückhalterung 40 aufnehmbar ist, die etwa eine Werkstückspindel 38, einen Reitstock 46 und ähnliche Gestaltelemente umfassen kann. Komponenten der Werkstückhalterung 40 können geeignete Gegenprofile aufweisen, die mit dem Führungsprofil 72 kompatibel und an diesem aufnehmbar sind.

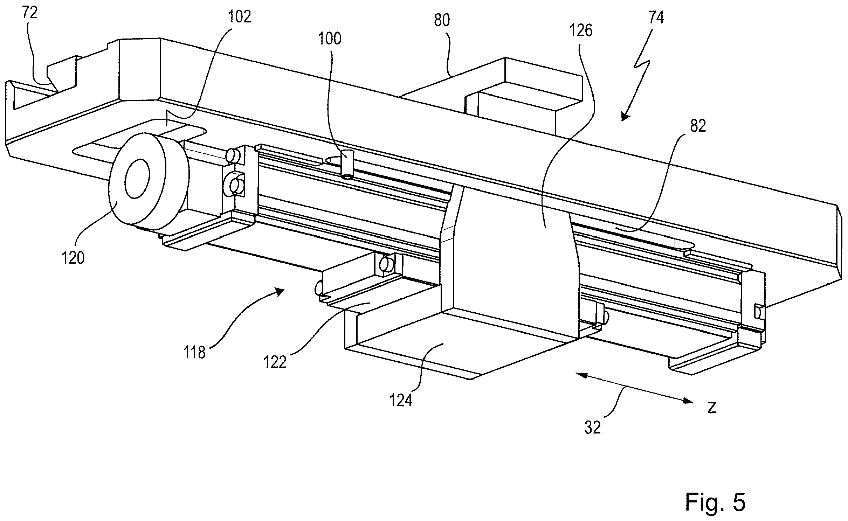

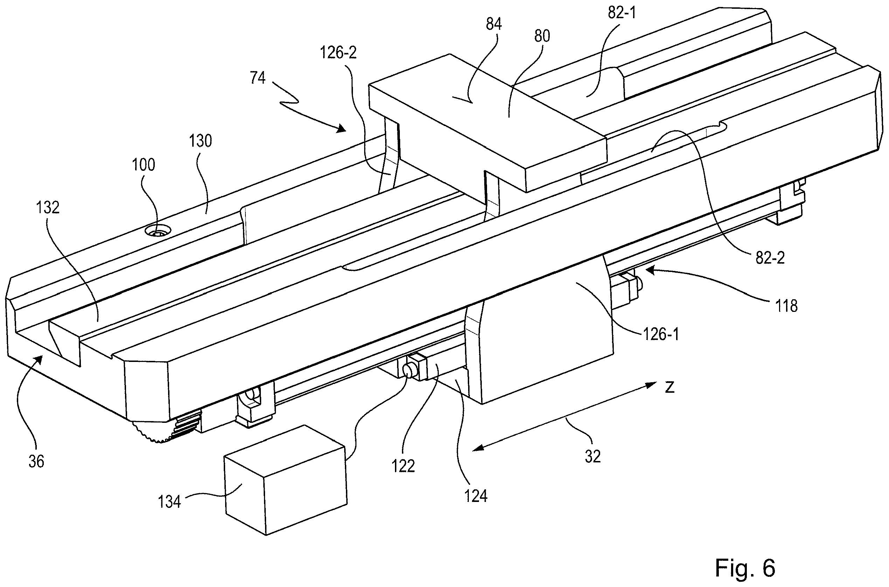

Zumindest ein Abschnitt des Führungsprofils 72 der Führung 36 wird durch einen mit 74 bezeichneten Trägerabschnitt gebildet. Der Trägerabschnitt 74 kann beispielhaft in einem in Fig. 2 mit 76 bezeichneten (mittigen) Abschnitt der Führung 36 angeordnet sein. Der Trägerabschnitt 74 kann als separates Teil ausgestaltet sein, das in geeigneter Weise mit dem Werkstücktisch 70 koppelbar ist, um eine durchgängige Führung 36 mit einem entsprechenden Führungsprofil 72 bereitzustellen. Detailansichten des Trägerabschnitts 74 können den Fig. 5 und 6 entnommen werden.

Vorzugsweise ist der Trägerabschnitt 74 dazu ausgestaltet, zumindest einen Modulträger 80 aufzunehmen, insbesondere längsverschieblich aufzunehmen. Zu diesem Zweck kann am Trägerabschnitt 74 zumindest eine Ausnehmung 82 ausgebildet sein, die vom Modulträger 80 bzw. von diesem zugeordneten Teilen durchragt wird. Vorzugsweise sind zwei Ausnehmungen 82-1, 82-2 im Trägerabschnitt 74 ausgebildet, die parallel zueinander angeordnet sind und sich im Wesentlichen in der Längsrichtung 32 erstrecken. Am Modulträger 80 kann eine Plattform 84 ausgebildet sein, die auch als Schnittstelle bezeichnet werden kann. Die Plattform 84 kann mit einem am Modulträger 80 aufzunehmenden Modul, etwa einer Messeinheit, gekoppelt werden.

Es ist besonders bevorzugt, wenn der Trägerabschnitt 74 einer in den Werkstücktisch 70 integrierbaren (Bewegungs-) Achse zugeordnet ist. Dies kann insbesondere beinhalten, dass der Modulträger 80 in der Längsrichtung 32 (Z-Achse) verfahrbar ist. Zu diesem Zweck kann der Modulträger 80 mit einem Antrieb 86 koppelbar sein. Der Antrieb 86 kann zumindest einen Motor 88 umfassen, der beispielhaft am Werkstücktisch 70 aufgenommen sein kann, vergleiche insbesondere die Fig. 2, 3 und 4. Der Motor 88 kann über seinen Abtrieb, etwa über ein Rad 90, mit dem Modulträger 80 gekoppelt werden. Beispielhaft kann das Rad 90 als Zahnriemenrad oder in ähnlicher Weise gestaltet sein. Demgemäß kann sich das Rad 90 im Eingriff mit einem in den Fig. 2 bis 6 nicht explizit dargestellten Riemen, insbesondere einem Zahnriemen, befinden. Der Riemen kann durch eine Ausnehmung 92 im Werkstücktisch 70 zum Trägerabschnitt 74 geführt sein. Die Ausnehmung 92 kann auch als Gehäuseausnehmung 92 bezeichnet werden.

Aus Fig. 3 wird ersichtlich, dass im Werkstücktisch 70 eine Aufnahme 96 zur Aufnahme des Trägerabschnitts 74 ausgebildet sein kann. Es ist bevorzugt, wenn der Trägerabschnitt 74 derart an die Aufnahme 96 angepasst ist, dass der Trägerabschnitt 74 möglichst "nahtlos" in den Werkstücktisch 70 integrierbar ist. Die Aufnahme 96 kann zumindest eine Passfläche 98 aufweisen, die an eine Passgegenfläche 102 des Trägerabschnitts 74 angepasst ist, vergleiche hierzu auch Fig. 5. Im gefügten Zustand kann die Passgegenfläche 102 die Passfläche 98 kontaktieren. Eine sichere Verbindung zwischen dem Trägerabschnitt 74 und dem Werkstücktisch 70 kann über zumindest ein Befestigungselement 100, vorzugsweise über eine Mehrzahl von Befestigungselementen 100, realisiert werden. In den Figuren ist aus Veranschaulichungsgründen jeweils lediglich ein Befestigungselement 100 dargestellt. Bei den Befestigungselementen 100 kann es sich etwa um Schrauben oder dergleichen handeln. Es ist von Vorteil, eine Mehrzahl von Befestigungselementen 100 vorzusehen, um eine hochsteife Verbindung zwischen dem Trägerabschnitt 74 und dem Werkstücktisch 70 gewährleisten zu können. Es ist ferner bevorzugt, wenn das Führungsprofil 72 auch am Trägerabschnitt 74 zumindest abschnittsweise ausgebildet ist. Demgemäß kann der Trägerabschnitt 74 im gefügten Zustand, vergleiche insbesondere Fig. 2, als integraler Bestandteil der Führung 36 aufgefasst werden.

Es ist grundsätzlich vorstellbar, auch den Modulträger 80 am Führungsprofil 72 aufzunehmen und zu führen. Alternativ ist es jedoch vorstellbar, den Modulträger 80 mit einer separaten Führung zu koppeln, diesen also unabhängig von der Führung 36 mit dem Führungsprofil 72 zu führen. Eine solche Gestaltung wird weiter unten anhand der Fig. 5 und 6 veranschaulicht.

Mit Bezugnahme auf Fig. 4 wird eine beispielhafte Bestückung des Modulträgers 80 veranschaulicht. Am Modulträger 80 bzw. an dessen Plattform 84 kann ein Messträger 106 aufgenommen sein, der einer Messeinheit 108 zugeordnet ist. Die Messeinheit 108 kann zumindest einen Messtaster 110 aufweisen, der dazu ausgestaltet ist, Gestaltelemente des Werkstücks 50 anzutasten. Die Messeinheit 108 kann beispielhaft dazu ausgestaltet sein, Durchmesser, Axialpositionen, axiale Abstände und ähnliche Maße des Werkstücks 50 zu erfassen.

Grundsätzlich kann die Messeinheit 108 auch dazu ausgestaltet sein, Lagetoleranzen, Formtoleranzen und Ähnliches zu erfassen. Dies kann die Erfassung einer Rundheit, einer Ebenheit und ähnlicher Größen umfassen. Zur Positionierung der Messeinheit 108 bzw. des zumindest einen Messtasters 110 kann ferner ein Schlitten 112 vorgesehen sein, der mit dem Modulträger 106 gekoppelt ist. Der Schlitten 112 kann zumindest eine Bewegung in der X-Richtung (Achse 30) erlauben. Eine Bewegung der Messeinheit 108 (bzw. des Modulträgers 80) in der Z-Richtung (Achse 32) kann etwa über den Antrieb 86 bewerkstelligt werden, der mit dem Modulträger 80 gekoppelt ist. Zu diesem Zweck kann in grundsätzlich bereits beschriebener Weise ein Riementrieb 116 vorgesehen sein, der den Motor 88 mit einem Lineartrieb 118 koppelt, der dem Trägerabschnitt 74 zugeordnet ist, vergleiche insbesondere auch Fig. 5 und Fig. 6. Mit anderen Worten können der Trägerabschnitt 74, der Modulträger 80 und der Antrieb 86 gemeinsam eine Positionierachse bilden, die ein Verfahren des Modulträgers 80 in der Z-Richtung entlang des Abschnitts der Führung 36 ermöglicht, der durch den Trägerabschnitt 74 definiert ist

Insbesondere kann auch der Lineartrieb 118 für den Modulträger 80 ein entsprechendes Rad oder Zahnriemenrad 120 aufweisen. Die Räder 90 und 120 können über den (nicht näher dargestellten) Riemen des Riementriebs 116 miteinander gekoppelt sein. Der Lineartrieb 118 kann etwa als Spindeltrieb gestaltet sein. Der Lineartrieb 118 kann einen Linearschlitten 122 umfassen, der in der Längsrichtung (Z-Richtung) kontrolliert und definiert verfahrbar ist.

Es ist von Vorteil, den Lineartrieb 118 an einer Seite des Trägerabschnitts 74 anzuordnen, die (im gefügten Zustand) durch den Trägerabschnitt 74 verdeckt ist. Auf diese Weise kann der Lineartrieb 118 vor Beschädigungen und übermäßigen Verschmutzungen geschützt werden. Ferner beeinträchtigt der Lineartrieb 118 die Längserstreckung des Führungsprofils 72 nicht oder nur unwesentlich. Es ist von Vorteil, wenn der Werkstücktisch 70 mit dem in diesen integrierten Trägerabschnitt 74 entlang seiner gesamten Längserstreckung (Z-Erstreckung) ein nutzbares Führungsprofil 72 bereitstellt. Dies heißt mit anderen Worten, dass es bevorzugt ist, wenn an der Führung 36 aufzunehmende Komponenten, etwa die Werkstückspindel 38, der Reitstock 46 oder dergleichen, auch zumindest teilweise im Abschnitt 36 aufnehmbar sind, vergleiche auch Fig. 2.

Aus Fig. 5 wird ferner ersichtlich, dass am Schlitten oder Linearschlitten 122 des Lineartriebs 118 eine Grundplatte 124 aufgenommen sein kann, die mit zumindest einem Tragarm 126 koppelbar ist. Vorzugsweise ist die Grundplatte 124 mit zwei Tragarmen 126-1, 126-2 koppelbar.

Der zumindest eine Tragarm 126 kann die zumindest eine Ausnehmung 82 im Trägerabschnitt 74 durchragen. Der zumindest eine Tragarm 126, vorzugsweise die beiden Tragarme 126-1, 126-2, sind mit dem Modulträger 80 koppelbar, an dessen Plattform 84 Module aufnehmbar sind. Mit anderen Worten kann sich durch den Modulträger 80, die Grundplatte 124 und die Tragarme 126-1, 126-2 ein geschlossenes Profil ergeben, das sich um den Lineartrieb 118 sowie um einen zentralen Teil des Trägerabschnitts, der durch die Ausnehmung 82-1, 82-2 begrenzt ist, erstreckt. Auf diese Weise kann der Modulträger 80 an der "Oberseite" des Trägerabschnitts 74 hochgenau positioniert werden, ohne dass die hierzu erforderliche Antriebstechnik das Führungsprofil 72 beeinträchtigt. Die Antriebstechnik, insbesondere der Lineartrieb 118 mit dem Linearschlitten 122, sind nämlich an der "Unterseite" des Trägerabschnitts 74 angeordnet. Der Modulträger 80 kann unabhängig von der (globalen) Führung 36 geführt sein. Eine (lokale) Führung für den Modulträger 80 kann durch den Lineartrieb 118 bereitgestellt werden bzw. diesem zugeordnet sein.

Aus Fig. 6 wird ferner ersichtlich, dass der Bereich des Trägerabschnitts 74, der die Führung 36 ausbildet, aus mehreren Komponenten gebildet sein kann. Beispielhaft kann der Trägerabschnitt 74 eine Basisplatte 130 aufweisen, die mit einer Leiste 132 koppelbar ist, um das Führungsprofil 72 auszubilden. Es versteht sich, dass andere Gestaltungen denkbar sind. In die Basisplatte 130 können die Ausnehmungen 82-1, 82-2 für die Tragarme 126-1, 126-2 eingebracht sein. Andere Ausführungen und Detailgestaltungen sind ohne weiteres denkbar.

In Fig. 6 ist ferner mit dem Bezugszeichen 134 eine Positionserfassungseinheit angedeutet, die dazu ausgestaltet ist, eine aktuelle Position (Ist-Position) des Modulträgers 80 und etwaiger daran aufgenommener Module zumindest entlang der Achse 32 (Z-Richtung) zu erfassen. In geeigneter Weise kann die Positionserfassungeinheit 134 mit dem Antrieb 86 gekoppelt sein, um eine definierte und überwachte Bewegung des Modulträgers 80 zu erlauben. Insbesondere kann die Positionserfassungeinheit 134 mit der Steuereinrichtung 60 (Fig. 1) gekoppelt sein, um dieser Positionsdaten zuzuführen. Die Steuereinrichtung 60 kann dazu ausgestaltet sein, den Antrieb 86 zum definierten Verfahren des Modulträgers 80 anzusteuern.

Generell kann die Werkstückaufnahme 34 mit dem Werkstücktisch 70, in den der Trägerabschnitt 74 integriert ist, den Funktionsumfang der Werkzeugmaschine 10 erhöhen. Dies erfolgt jedoch nicht zu Lasten grundlegender Funktionen. Dies kann etwa darauf zurückführbar sein, dass der Trägerabschnitt 74 von außen "unsichtbar" oder nahezu "unsichtbar" in den Werkstücktisch 70 integriert sein kann. Auf diese Weise wird die Schnittstelle, die die Führung 36 bereitstellt, nicht oder nur unwesentlich beeinträchtigt. Bei der Aufnahme von Werkstücken 50 an der Werkstückaufnahme 34 ergeben sich daher keine wesentlichen Einschränkungen. Gleichwohl erlaubt die Integration einer zusätzlichen steuerbaren (Verfahr-) Achse in den Werkstücktisch 70 eine Vielzahl vorteilhafter Konfigurationen, die insbesondere die Integration von Messaufgaben und Qualitätssicherungsaufgaben betreffen können.

## Patentansprüche

1. Werkstückaufnahmeeinrichtung (34) für eine Werkzeugmaschine (10), insbesondere eine Schleifmaschine, zur spanenden Bearbeitung von Werkstücken (50), wobei die Werkstückaufnahmeeinrichtung (34) einen Werkstücktisch (70) mit einer Führung (36) aufweist, an der eine Werkstückhalterung (40) aufnehmbar ist, wobei der Werkstücktisch (70) ferner einen Trägerabschnitt (74) mit einem Modulträger (80) aufweist, wobei der Trägerabschnitt (74) der Führung (36) zugeordnet ist, und wobei der Modulträger (80) längsverschieblich am Trägerabschnitt (74) aufgenommen ist und mit einem Antrieb (86) koppelbar ist, **dadurch gekennzeichnet, dass** der Trägerabschnitt (74) in die Führung (36) integriert ist.

2. Werkstückaufnahmeeinrichtung (34) nach Anspruch 1, wobei der Trägerabschnitt (74), der Modulträger (80) und der Antrieb (86) eine Positionierachse definieren, die ein Verfahren des Modulträgers (80) in einer Längsrichtung (32) entlang zumindest eines Abschnitts der Führung (36) erlaubt, der durch den Trägerabschnitt (74) definiert ist, und wobei die Werkstückhalterung (40) längsverschieblich an der Führung (36) aufnehmbar ist.

3. Werkstückaufnahmeeinrichtung (34) nach Anspruch 1 oder 2, wobei der Trägerabschnitt (74) als Einsatz ausgebildet ist, der in einer Aufnahme (96) des Werkstücktisches (70) aufnehmbar ist.

4. Werkstückaufnahmeeinrichtung (34) nach einem der vorhergehenden Ansprüche, wobei die Führung (36) ein sich in der Längsrichtung (32) erstreckendes Führungsprofil (72) aufweist, und wobei sich das Führungsprofil (72) im Werkstücktisch (70) erstreckt und zumindest abschnittsweise auch im Trägerabschnitt (74) fortsetzt.

5. Werkstückaufnahmeeinrichtung (34) nach Anspruch 4, wobei das Führungsprofil (72) des Werkstücktisches (70) und das Führungsprofil (72) des Trägerabschnitts (74) im miteinander gefügten Zustand miteinander ausgerichtet sind, vorzugsweise deckungsgleich miteinander ausgerichtet sind.

6. Werkstückaufnahmeeinrichtung (34) nach einem der vorhergehenden Ansprüche, wobei der Trägerabschnitt (74) einen Abschnitt (76) der Führung (36) ausbildet, insbesondere einen mittigen Abschnitt (76) entlang einer Längserstreckung der Führung.

7. Werkstückaufnahmeeinrichtung (34) nach einem der vorhergehenden Ansprüche, wobei der Modulträger (80) zumindest einen Tragarm (126) umfasst, der eine sich im Wesentlichen in der Längsrichtung erstreckende Ausnehmung des Trägerabschnitts (74) durchragt.

8. Werkstückaufnahmeeinrichtung (34) nach einem der vorhergehenden Ansprüche, wobei der Modulträger (80) mit einem Lineartrieb (118) koppelbar ist, insbesondere mit einem Spindeltrieb.

9. Werkstückaufnahmeeinrichtung (34) nach Anspruch 8, wobei der Lineartrieb (118) mit einem Motor (88), insbesondere einem Servomotor, koppelbar ist, wobei der Motor (88) an den Werkstücktisch (70) angekoppelt ist, und wobei der Motor mittelbar mit dem Modulträger (80) koppelbar ist, insbesondere mittels eines Riementriebs (116), wobei sich der Riementrieb (116) zumindest abschnittsweise durch eine Gehäuseausnehmung (92) im Werkstücktisch (70) erstreckt.

10. Werkstückaufnahmeeinrichtung (34) nach einem der vorhergehenden Ansprüche, wobei am Werkstücktisch (70) eine erste Halterung (38) und eine zweite Halterung (46), insbesondere eine Werkstückspindel (38) und ein Reitstock (46), aufgenommen sind, wobei die erste Halterung (38), die zweite Halterung (46) und der Modulträger (80) an der Führung (36) aufgenommen sind, und wobei der Modulträger (80) zwischen der ersten Halterung (38) und der zweiten Halterung (46) verfahrbar ist.

11. Werkstückaufnahmeeinrichtung (34) nach einem der vorhergehenden Ansprüche, wobei am Modulträger (80) ein Messaufnehmer (110), insbesondere ein optischer Messtaster, ein taktiler Messtaster oder ein Näherungssensor, aufgenommen ist.

12. Werkstückaufnahmeeinrichtung (34) nach einem der vorhergehenden Ansprüche, wobei ferner eine Positionserfassungeinheit (134) vorgesehen ist, die dazu ausgebildet ist, absolute Positionen und/oder relative Positionen des Modulträgers (80), insbesondere eines am Modulträger (80) aufgenommenen Messaufnehmers (110), zu erfassen.

13. Werkzeugmaschine (10), insbesondere Schleifmaschine, zur spanenden Bearbeitung von Werkstücken (50), mit einer Werkstückaufnahmeeinrichtung (34) nach einem der vorhergehenden Ansprüche zur Aufnahme eines Werkstücks (50), und mit einem Spindelkopf (24) zur Aufnahme eines Werkzeugs (18), insbesondere einer Schleifscheibe (18).

14. Werkzeugmaschine (10) nach Anspruch 13, wobei die Werkzeugmaschine (10) als T-Schlittenmaschine mit einem in der Längsrichtung verschieblichen Werkstücktisch (70) oder als Kreuzschlittenmaschine mit einem Werkstücktisch (70) ausgebildet ist, der an einem Maschinenbett (14) festgelegt ist.

15. Werkzeugmaschine (10) nach einem der Ansprüche 13 oder 14, ferner umfassend eine Steuereinrichtung (60), die mit einer Positionserfassungeinheit (134) koppelbar ist, die dazu ausgebildet ist, Verfahrwege des Modulträgers (80), insbesondere Verfahrwege eines am Modulträger (80) aufgenommenen Messaufnehmers (110), zu erfassen.

## Claims

1. Workpiece holding device (34) for a machine tool (10), particularly for a grinding machine, for machining workpieces (50), wherein the workpiece holding device (34) comprises a workpiece table (70) having a guide (36), wherein a workpiece holder (40) is arranged to be mounted to the guide (36), wherein the workpiece table (70) further comprises a carrier section (74) having a module support (80), wherein the carrier section (74) is assigned to the guide (36), and wherein the module support (80) is mounted to the carrier section (74) in a longitudinally displaceable manner and arranged to be coupled with a drive (86), **characterized in that** the carrier section (74) is integrated in the guide (36).

2. Workpiece holding device (34) according to claim 1, wherein the carrier section (74), the module support (80) and the drive (36) define a positioning axis that provides for a displacement of the module support (80) in a longitudinal direction (32) along at least a section of the guide (36) that is defined by the carrier section (74), and wherein the workpiece holder (40) is arranged to be mounted to the guide (36) in a longitudinally displaceable manner.

3. Workpiece holding device (34) according to claim 1 or 2, wherein the carrier section (74) is arranged as an insert that is arranged to be accommodated in a socket (96) of the workpiece table (70).

4. Workpiece holding device (34) according to any one of the preceding claims, wherein the guide (36) comprises a guide profile (72) extending in the longitudinal direction (32), and wherein the guide profile (72) extends in the workpiece table (70) and also extends, at least sectionally, in the carrier section (74).

5. Workpiece holding device (34) according to claim 4, wherein the guide profile (72) of the workpiece table (70) and the guide profile (72) of the carrier section (74) are aligned to one another in the assembled state, and preferably congruently orientated with respect to one another.

6. Workpiece holding device (34) according to any one of the preceding claims, wherein the carrier section (74) forms a section (76) of the guide (36), particularly a central section (76) along a longitudinal extension of the guide.

7. Workpiece holding device (34) according to any one of the preceding claims, wherein the module support (80) comprises at least one support arm (126) that extends through a recess of the carrier section (74) that extends basically in the longitudinal direction.

8. Workpiece holding device (34) according to any one of the preceding claims, wherein the module support (80) is arranged to be coupled to a linear drive (118), particularly to a spindle drive.

9. Workpiece holding device (34) according to claim 8, wherein the linear drive (118) is arranged to be coupled to a motor (88), particularly to a servo motor, wherein the motor (88) is coupled to the workpiece table (70), and wherein the motor is arranged to be mediately coupled to the module support (80), particularly by means of a belt drive (116), wherein the belt drive (116) at least sectionally extends through a housing recess (92) in the workpiece table (70).

10. Workpiece holding device (34) according to any one of the preceding claims, wherein a first holder (38) and a second holder (46), particularly a workpiece spindle (38) and a tailstock (46), are mounted to the workpiece table (70), wherein the first holder (38), the second holder (46) and the module support (80) are mounted at the guide (36), and wherein the module support (80) is displaceable between the first holder (38) and the second holder (46).

11. Workpiece holding device (34) according to any one of the preceding claims, wherein a sensing element (110), particularly an optical measurement probe, a tactile measurement probe, or a proximity sensor, is mounted to the module support (80).

12. Workpiece holding device (34) according to any one of the preceding claims, wherein further a position detection unit (134) is provided that is arranged to detect absolute positions and/or relative positions of the module support (80), particularly of a sensing element (110) that is mounted to the module support (80).

13. Machine tool (10), particularly grinding machine, for machining workpieces (50), comprising a workpiece holding device (34) according to any of the preceding claims for holding a workpiece (50), and a spindle head (24) for holding a tool (18), particularly a grinding wheel (18).

14. Machine tool (10) according to claim 13, wherein the machine tool (10) is arranged as a T-slide machine having a workpiece table (70) that is displaceable in the longitudinal direction, or as a compound slide machine having a workpiece table (70) that is fixedly attached to a machine bed (14).

15. Machine tool (10) according to any one of the claims 13 or 14, further comprising a control device (60) that is arranged to be coupled with a position detection unit (134) that is arranged to detect displacement paths of the module support (80), particularly displacement paths of a sensing element (110) that is mounted to the module support (80).

## Revendications

1. Dispositif (34) de reprise de pièces pour machine-outil (10), en particulier meuleuse, en vue du traitement de pièces (50) par enlèvement de matière, le dispositif (34) de reprise de pièces présentant une table (70) à pièces dotée d'un guide (36) sur lequel un support (40) de pièces peut être repris,
la table (70) à pièces présentant en outre une partie de support (74) présentant un porte-module (80),
la partie de support (74) étant associée au guide (36) et
le porte-module (80) étant repris à coulissement longitudinal sur la partie de support (74) et pouvant être raccordé à un entraînement (86),
**caractérisé en ce que**
la partie de support (74) est intégrée dans le guide (36).

2. Dispositif (34) de reprise de pièces selon la revendication 1, dans lequel la partie de support (74), le porte-module (80) et l'entraînement (86) définissent un axe de positionnement qui permet un déplacement du porte-module (80) dans une direction longitudinale (32) qui longe au moins une partie du guide (36) et qui est définie par la partie de support (74), le support (40) de pièces pouvant être repris à coulissement longitudinal sur le guide (36).

3. Dispositif (34) de reprise de pièces selon les revendications 1 ou 2, dans lequel la partie de support (74) est configurée comme garniture qui peut être reprise dans un logement (96) de la table (70) à pièces.

4. Dispositif (34) de reprise de pièces selon l'une des revendications précédentes, dans lequel le guide (36) présente un profil de guidage (72) qui s'étend dans le sens de sa longueur (32), le profil de guidage (72) s'étendant dans la table (70) à pièces et se prolongeant au moins en partie également dans la partie de support (74).

5. Dispositif (34) de reprise de pièces selon la revendication 4, dans lequel le profil de guidage (72) de la table (70) à pièces et le profil de guidage (72) de la partie de support (74) sont alignés l'un sur l'autre lorsqu'ils sont en position jointive, et sont de préférence alignés de manière à se recouvrir mutuellement.

6. Dispositif (34) de reprise de pièces selon l'une des revendications précédentes, dans lequel la partie de support (74) forme une partie (76) du guide (36) et en particulier une partie (76) située au centre dans le sens de la longueur du guide.

7. Dispositif (34) de reprise de pièces selon l'une des revendications précédentes, dans lequel le porte-module (80) comporte au moins un bras porteur (126) qui traverse une découpe de la partie de support (74) qui s'étend essentiellement dans le sens de la longueur.

8. Dispositif (34) de reprise de pièces selon l'une des revendications précédentes, dans lequel le porte-module (80) peut être raccordé à un entraînement linéaire (118) et en particulier à un entraînement de broche.

9. Dispositif (34) de reprise de pièces selon la revendication 8, dans lequel l'entraînement linéaire (118) peut être raccordé à un moteur (88) et en particulier à un servomoteur, le moteur (88) étant raccordé à la table (70) à pièces, le moteur pouvant être raccordé indirectement au porte-module (80), en particulier au moyen d'un entraînement (116) à courroie, l'entraînement (116) à courroie traversant au moins en partie une découpe (92) de boîtier ménagée dans la table (70) à pièces.

10. Dispositif (34) de reprise de pièces selon l'une des revendications précédentes, dans lequel un premier support (38) et un deuxième support (46), en particulier une broche (38) à pièces et une poupée mobile (46) sont repris sur la table (70) à pièces, le premier support (38), le deuxième support (46) et le porte-module (80) étant repris sur le guide (36) et le porte-module (80) pouvant être déplacé entre le premier support (38) et le deuxième support (46).

11. Dispositif (34) de reprise de pièces selon l'une des revendications précédentes, dans lequel un enregistreur de mesure (110), en particulier un palpeur optique de mesure, un palpeur tactile de mesure ou un capteur de proximité, est repris sur le porte-module (80).

12. Dispositif (34) de reprise de pièces selon l'une des revendications précédentes, dans lequel une unité (134) de détection de position est en outre prévue et est configurée pour saisir des positions absolues et/ou des positions relatives du porte-module (80) et en particulier d'un enregistreur de mesure (110) repris sur le porte-module (80).

13. Machine-outil (10), en particulier meuleuse, pour le traitement de pièces (50) par enlèvement de matière, et présentant un dispositif (34) de reprise de pièces selon l'une des revendications précédentes, pour reprendre une pièce (50), et une tête de broche (24) qui reprend un outil (18) et en particulier un disque de meulage (18).

14. Machine-outil (10) selon la revendication 13, dans laquelle la machine-outil (10) est configurée comme machine à chariot en T présentant une table (70) à pièces apte à coulisser dans le sens de la longueur ou une machine à chariot en croix dotée d'une table (70) à pièces fixée sur un lit (14) de machine.

15. Machine-outil (10) selon l'une des revendications 13 ou 14, comprenant en outre un dispositif de commande (60) qui peut être raccordé à une unité (134) de détection de position configurée pour saisir les trajets parcourus par le porte-module (80) et en particulier les trajets parcourus par un enregistreur de mesure (110) repris sur le porte-module (80).
